# EUROPEAN PATENT APPLICATION

(11) **EP 2 477 423 A1**
(43) Date of publication of application: **18.07.2012**
(21) Application number: 10815199.4
(22) Date of filing: 25.06.2010
(51) Int. Cl.: H04W 4/06, H04W 52/00, H04W 64/00

(54) **WIRELESS COMMUNICATION SYSTEM, BASE STATION APPARATUS, MOBILE STATION APPARATUS, AND COMMUNICATION METHOD**

(30) Priority: 11.09.2009 JP 2009210348
(71) Applicant: Sharp Kabushiki Kaisha, Osaka-shi, Osaka 545-8522 (JP)
(72) Inventor: TSUBOI, Hidezaku c/o SHARP Kabushiki Kaisha, Osaka 545-8522 (JP); UEMURA, Katsunari c/o SHARP Kabushiki Kaisha, Osaka 545-8522 (JP); NAKASHIMA, Daiichiro c/o SHARP Kabushiki Kaisha, Osaka 545-8522 (JP)
(74) Representative: Müller - Hoffmann & Partner
(86) International application number: PCT/JP2010/060816
(87) International publication number: WO 2011/030601

(57) **Abstract**

To perform MBMS transmission capable of effective utilization of resources without increasing load in a mobile station apparatus. In a wireless communication system including a base station apparatus and mobile station apparatuses to provide an MBMS (Multimedia Broadcast Multicast Service), the base station apparatus transmits a message for aggregating the number of mobile station apparatuses requesting an MBMS to a mobile station apparatus being served, and, among the mobile station apparatuses, the mobile station apparatus requesting an MBMS adds intra-cell location information of its own to a response message to the message and transmits the response message added with the intra-cell location information to the base station apparatus.

## Description

### Technical Field

The present invention relates to a wireless communication system, a base station apparatus, a mobile station apparatus, and a communication method which perform communication using a plurality of subcarriers, and particularly to a communication method of an MBMS (Multimedia Broadcast Multicast Service).

### Background Art

Evolved Universal Terrestrial Radio Access (hereinafter referred to as EUTRA) which has evolved the third generation mobile communication system in the 3GPP (3rd Generation Partnership Project), and Advanced EUTRA (also called LTE-Advanced, and hereinafter referred to as A-EUTRA) which is a further development thereof are under study (see Non-patent document 1).

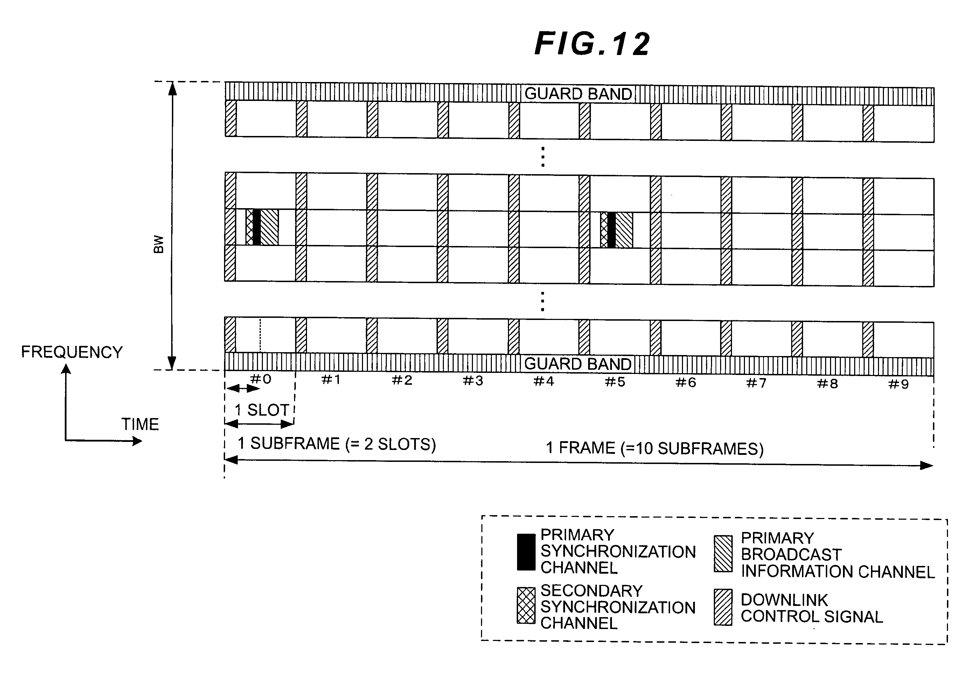

FIG. 12 illustrates an exemplary configuration of a downlink radio frame in EUTRA. In FIG. 12, a radio frame is shown with the time axis being the horizontal axis and the frequency axis being the vertical axis. A unit of the radio frame is composed of dividing the frequency axis into 12 subcarriers (sc) and the time axis into slots which are aggregates of a plurality of OFDM symbols, and a region partitioned by 12 subcarriers and one slot length is referred to as a resource block. A set of two slots is referred to as a subframe, and a set of 10 subframes is referred to as a frame. A plurality of resource blocks is contiguously arranged in the frequency direction, with 100 resource blocks being arranged in a bandwidth of BW =20 MHz. A guard band in which no signal is transmitted is provided at both ends thereof to prevent radiation to adjacent bands.

As indicated by the explanatory note in FIG. 12, the subframes 0# and 5# each include a primary synchronization channel (P-SCH) used for synchronization with the base station, a secondary synchronization channel (S-SCH), and a primary broadcast information channel (P-BCH). The mobile station apparatus establishes frame synchronization using P-SCH and S-SCH, and also specifies a physical cell ID (PCI:Physical Cell Identification) for identifying the base station apparatus. In addition, the mobile station apparatus acquires main parameters such as the number of transmitting antenna ports by demodulating broadcast information (MIB (Master Information Block)) included in P-BCH, and acquires other broadcast information from a dynamic broadcast channel (D-BCH) provided in a downlink shared channel (DL-SCH). The broadcast information included in D-BCH is divided into a plurality of blocks according to the type of information, and respectively broadcasted with individual cycles in a unit referred to as SIB (System Information Block).

Furthermore, a variable-length (1 to 4 OFDM symbols) physical downlink control channel (PDCCH) is included at the top of each subframe. The number of OFDM symbols used in a PDCCH is determined by a signal referred to as PCFICH (Physical Control Format Indicator Channel) provided at the top of each subframe. Furthermore, although not illustrated, a reference signal (downlink reference signal, DL-RS) required for demodulation and measurement of reception quality is included in each resource block. The mobile station apparatus performs measurement of reception quality and channel compensation of the PDCCH using the reference signal and, if there is data allocation in the PDCCH addressed to the station itself, demodulates the PDSCH included in the OFDM symbol after the PDCCH to acquire data addressed to the station itself.

In addition, the MBMS is defined which provides the same data to a plurality of mobile station apparatuses existing in a particular area in the communication system. The MBMS includes a multicast service and a broadcast service, the former usually being a service provided to users who have registered and subscribed to particular services, and the latter being a service provided to all the users existing in the particular area. As MBMS providing methods, there are MBSFN (Multicast/Broadcast over Single Frequency Network), SC-PTP (Single Cell-Point To Point), SC-PTM (Single Cell-Point To Multipoint), MC-PTM (Multi Cell-Point To Multipoint), or the like, as described in the non-patent document 2.

In MBSFN, a plurality of adjacent base station apparatuses broadcasts the same signal using the same subframe. It is advantageous that overhead is reduced when there are many mobile station apparatuses receiving the service. SC-PTP is used if there are few mobile station apparatuses receiving the MBMS or if it is desired to continue the service when leaving the area broadcasted by MBSFN, and is transmitted to each mobile station apparatus as data addressed to the user using the PDSCH. It is effective if there are few mobile station apparatuses receiving the service, or if there is a large difference in reception quality among a plurality of mobile station apparatuses receiving the service. PTM (point-to-multipoint) is used, for example, if a plurality of mobile station apparatuses receiving the MBMS can form a group with a similar degree of reception quality, and is transmitted using PDSCH or the like, to the group, as data addressed to the group using an optimal transmission parameter (modulation method, coding rate, etc.). PTM includes SC-PTM in which only one cell performs transmission and MC-PTM in which transmission is performed from a plurality of cells.

In EUTRA, in release 9, the MBMS using MBSFN is provided. Furthermore, in release 10 (A-EUTRA), using PTM and SC-PTP is also under study. PTM has been introduced in release 6 and the subsequent releases of the current UMTS (Universal Mobile Telecommunications System). The overall operation in Release 8 is described in the non-patent document 3, and details of the operation of RRC (Radio Resource Control) are described in the non-patent document 4, respectively. In A-EUTRA also, MBMS is under study based on this scheme.

As channels used in the UMTS when providing the MBMS via PTM, three channels, i.e., an MBMS point-to-multipoint Traffic Channel (MTCH), an MBMS point-to-multipoint Control Channel (MCCH), and an MBMS point-to-multipoint Scheduling Channel (MSCH) have been defined as Logical Channels for the MBMS. Here, an MTCH is a channel for transmitting data of the MBMS, that is, a data channel. Additionally, an MCCH is a channel including control information for providing the MBMS, that is, a control channel. Furthermore, an MSCH is a channel for transmitting scheduling information of the MTCH, that is, a control channel.

Next, a transport channel is used by a Forward Access Channel (FACH) to transmit the three Logical Channels described above. Finally, a physical channel is used by the Secondary Common Control Physical Channel (S-CCPCH) to transmit the FACH described above.

Next, the layer 2 and the layer 3 will be mainly explained below. Messages of the MCCH include MBMS Access Information used for Counting described below, MBMS Common PTM RB Information which is the common setting information among cells, MBMS Current Cell PTM RB Information which is setting information for the cell of its own, MBMS Neighbouring Cell PTM RB Information which is setting information for adjacent cells, MBMS General Information including general MBMS setting information or the like, MBMS Modified Services Information including information relating to services which has been modified, and MBMS Unmodified Services Information including information relating to services which has not been modified.

A mobile station apparatus receives the above-mentioned MCCH messages and performs settings thereof, and thereby can receive an MTCH which actually transmits data or an MSCH which transmits scheduling information of the MTCH.

Next, Notification and Counting will be explained. The MBMS does not always provide services, but provides services regularly or irregularly. In order to support such services, it is necessary to notify the mobile station apparatus of the fact that the network starts providing a service in which a user may be interested. This operation is referred to as Notification. The Notification includes the one checking whether or not a service requested by the mobile station apparatus is being provided by the mobile station apparatus directly checking the MBMS Modified Services Information and MBMS Unmodified Services Information defined in the MCCH, and the one determining whether or not it is necessary to check the above-mentioned MBMS Modified Services Information by checking the MBMS Indicator Channel (MICH), and performing the checking only when necessary.

Furthermore, the network can determine both the necessity of providing any of the services to be provided as the MBMS and the method of providing the service by performing the Counting described below.

First, the network causes a parameter called a Probability factor to be included in the MBMS ACCESS INFORMATION which is periodically transmitted as information for performing the Counting for a service to be provided from now on to the mobile station apparatus. The Probability factor may either have a value for a mobile station apparatus in an idle state and a value for a mobile station apparatus in a connected state individually set, or use a same value for both states. Furthermore, the mobile station apparatus is prompted to acquire the MBMS ACCESS INFORMATION by causing a signal (Acquire Counting Info) which prompts to acquire Counting information to be included in the MBMS Modified Services Information. In the following explanation, message transmission for performing the above-mentioned Counting is generally referred as a Counting signal.

The above-mentioned Probability factor is a parameter for preventing line congestion caused by response from all the mobile station apparatuses requesting a particular service. Specifically, among the mobile station apparatuses requesting a particular service, only the mobile station apparatus with the generated random number not exceeding the Probability factor responds. The network can know, by recognizing, among the mobile station apparatuses requesting a particular service, the mobile station apparatus which responded based on the Probability factor acquired from the MBMS ACCESS INFORMATION, that it is necessary to provide the service to that cell. If there is no response from the mobile station apparatuses, the network can modify the Probability factor to a larger value so that a larger number of mobile station apparatuses can respond.

The network next determines how to provide the services. For example, since Multicast transmits the same information to a plurality of mobile station apparatuses, it is necessary to perform transmission with a high electric power, considering mobile station apparatuses existing at the cell edge (cell end). However, if there are few mobile station apparatuses requesting a particular service, there may be a case that it is better to transmit the same information respectively to individual mobile station apparatuses. For example, if there are four or more mobile station apparatuses, the network provides a servoce via PTM using the FACH which has been mapped on the S-CCPCH and, if there are less than four mobile station apparatuses, provides a service individually via PTP using a DCH (Dedicated Channel) which has been mapped on a DL-DPDCH (Down Link-Dedicated Physical Data Channel). In other words, the network confirms the number of mobile station apparatuses requesting a service to be provided by Counting, and switches MBMS providing methods in the UMTS.

In addition, if there is a mobile station apparatus in a poor reception state when providing the MBMS via PTM, the patent document 1 proposes individually providing a service via SC-PTP to the mobile station apparatus in a poor reception state, while continuing the service via PTM. Furthermore, if the number of mobile station apparatuses receiving a service via SC-PTP exceeds a certain number, it is proposed to reduce the number of mobile stations requiring the service via SC-PTP by increasing the transmission power of PTM. In other words, an approach of setting two providing methods (PTM and SC-PTP) as appropriate, based on the reception state of PTM in the receiving mobile station apparatus is proposed.

Patent Document 1: Japanese Patent Laid-Open No. 2006-135956

Non-Patent Document 1: 3GPP TR36.913, Requirements for Further Advancements for E-UTRA.V8.0.0http://www.3gpp.org/ftp/Specs/html-info/36913.ht m
Non-Patent Document 2: Alcatel-Lucent,R2-080983,3GPP TSG-RAN2 Meeting #61,Sorrento,Italy,Feb 11-15,2008
Non-Patent Document 3: 3GPP TS25.346,V8.3.0http://www.3gpp.org/ftp/Specs/html-info/25346. htm
Non-Patent Document 4: 3GPP TS25.331,V8.7.0http://www.3gpp.org/ftp/Specs/html-info/25331. htm

### Disclosure of the Invention

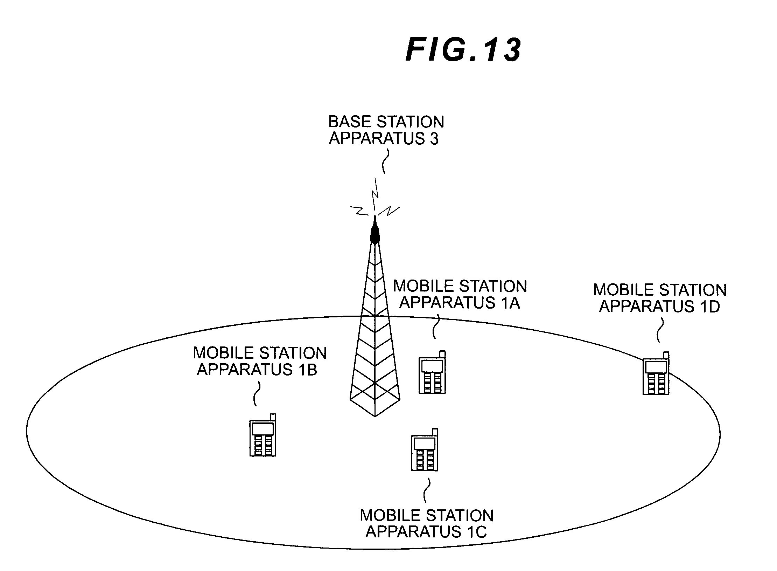

FIG.13 illustrates the overall configuration of a wireless communication system. As described above, in the UMTS, the MBMS can switch the providing methods according to the number of mobile station apparatuses requesting a service. However, although provision of service is performed via PTM based on the number of mobile station apparatuses 1 when there are mobile station apparatuses 1A, 1B and 1C in the vicinity of the cell center, and a mobile station apparatus 1D at the cell edge as shown in FIG. 13 (hereinafter mobile station apparatuses (1A to 1D) are expressed as mobile station apparatuses 1), it is necessary to perform transmission with a modulation/encoding scheme robust to noise and a high electric power so that even the mobile station apparatus 1D at the cell edge can receive, which may result in wasted radio resources and electric power.

Additionally, in the patent document 1, the number and arrangement of the mobile station apparatuses 1 requesting reception of an MBMS in a service cell are grasped based on the information of the reception state of the MBMS, which is first transmitted via PTM from a base station apparatus 3 to the mobile station apparatuses 1 in the service cell requesting reception of the MBMS and then transmitted from the mobile station apparatuses 1 to the base station apparatus 3.

However, the approach uses the MBMS transmitted via PTM using a large amount of communication resources only for grasping the number and arrangement of the mobile station apparatuses 1 in the service cell requesting reception of the MBMS, resulting in problems such as degradation of usage efficiency of communication resources or increase of processes in the mobile station apparatuses 1.

Considering the above problems, it is an object of the present invention to provide a wireless communication system, a base station apparatus, a mobile station apparatus, and a communication method which avoids problems such as degradation of usage efficiency of communication resources or increase of processes in the mobile station apparatus by making it easier to grasp the number and arrangement of mobile stations in a service cell requesting reception of an MBMS.

(1) In order to achieve the above object, the present invention has taken the following measures. That is, the wireless communication system of the present invention is a wireless communication system including a base station apparatus and mobile station apparatuses to provide an MBMS (Multimedia Broadcast Multicast Service), in which the base station apparatus transmits a message for aggregating the number of mobile station apparatuses requesting an MBMS to a mobile station apparatus being served; and among the mobile station apparatuses, the mobile station apparatus requesting an MBMS adds intra-cell location information of the mobile station itself to a response message to the message and transmits the response message added with the intra-cell location information to the base station apparatus.

As thus described, since intra-cell location information of a mobile station apparatus requesting an MBMS is added to a response message for a message and the response message having the intra-cell location information added thereto is transmitted to the base station apparatus, it becomes possible to provide an appropriate MBMS based on the intra-cell location of the mobile station apparatus, enabling effective utilization of radio resources thereby. In addition, since the process required in the mobile station apparatus only adds to the Counting response a signal based on reception power of the downlink reference signal which has always been being measured and uses it to select a providing method in the Notification, increase of power consumption can be suppressed without requiring a complicated process. Furthermore, it also becomes possible to provide optimal transmission parameters even when many mobile station apparatuses requesting the service are in the vicinity of the cell center.

(2) In addition, the wireless communication system of the present invention is a wireless communication system including a base station apparatus and mobile station apparatuses to provide an MBMS (Multimedia Broadcast Multicast Service), in which the base station apparatus adds threshold information of intra-cell location of the mobile station apparatus to a message for aggregating the number of mobile station apparatuses requesting an MBMS and transmits the message added with the threshold information to the mobile station apparatus being served, and among the mobile station apparatuses, the mobile station apparatus requesting an MBMS determines whether or not to respond to the message based on the threshold information of intra-cell location and the intra-cell location of its own.

As thus described, since a mobile station apparatus requesting an MBMS determines whether or not to respond to a message based on the threshold information of intra-cell location and the intra-cell location, it becomes possible to acquire NumE and NumC for use in determining the MBMS providing method while reducing the amount of information required in a Counting response. In addition, it becomes possible to classify target mobile station apparatuses to be responded, whereby line congestion at the time of responding can be reduced even if the Probability factor value is set high. In addition, it becomes possible to provide an appropriate MBMS based on the intra-cell location of the mobile station apparatus, enabling effective utilization of radio resources thereby. In addition, since the process required in the mobile station apparatus only adds to the Counting response a signal based on reception power of the downlink reference signal which has always been being measured and uses it to select a providing method in the Notification, increase of power consumption can be suppressed without requiring a complicated process. Furthermore, it also becomes possible to provide optimal transmission parameters even if there are many mobile station apparatuses requesting service in the vicinity of the cell center.

(3) Additionally, in the wireless communication system of the present invention, the base station apparatus receives the response message from the mobile station apparatus, aggregates the number of mobile station apparatuses requesting an MBMS for each intra-cell location, and provides an MBMS to the mobile station apparatus based on an MBMS providing method determined for the each intra-cell location.

As thus described, since the base station apparatus aggregates the number of mobile station apparatuses requesting an MBMS for each intra-cell location and provides the MBMS to the mobile station apparatus based on an MBMS providing method determined for each intra-cell location, enabling effective utilization of radio resources thereby. In addition, it also becomes possible to provide optimal transmission parameters even if there are many mobile station apparatuses requesting service in the vicinity of the cell center.

(4) Additionally, in the wireless communication system of the present invention, the base station apparatus transmits a message for notifying the MBMS providing method to a mobile station apparatus requesting an MBMS and, if a plurality of MBMS providing methods are included in the message for notifying the MBMS providing method, the mobile station apparatus selects an MBMS providing method based on intra-cell location information of its own.

As thus described, since the mobile station apparatus selects an MBMS providing method based on intra-cell information of its own, if a plurality of MBMS providing methods is included in the message for notifying an MBMS providing method, the base station apparatus needs not perform transmission to a mobile station apparatus in the vicinity of the cell center via PTM similarly to a mobile station apparatus at the cell edge if there are mobile station apparatuses in the vicinity of the cell center and at the cell edge, suppressing waste of radio resources and electric power thereby. In addition, a mobile station apparatus receiving a service via SC-PTP needs not measure reception quality of PTM in order to switch to reception via PTM, and whereby it becomes possible to prevent increase of processes in the mobile station apparatus.

(5) Additionally, in the wireless communication system of the present invention, the MBMS providing method is one of MBSFN (Multicast/Broadcast over Single Frequency Network), SC-PTP (Single Cell-Point To Point), SC-PTM (Single Cell-Point To Multipoint), and MC-PTM (Multi Cell-Point To Multipoint).

As thus described, since the MBMS providing method is one of MBSFN (Multicast/Broadcast over Single Frequency Network), SC-PTP (Single Cell-Point To Point), SC-PTM (Single Cell-Point To Multipoint), and MC-PTM (Multi Cell-Point To Multipoint), it becomes possible to provide an optimal MBMS according to the number or location of mobile station apparatuses, difference of reception quality, or the like.

(6) Additionally, in the wireless communication system of the present invention, the intra-cell location information is two-value information indicating the vicinity of the cell center and the vicinity of the cell edge.

As thus described, the intra-cell location information is two-value information indicating the vicinity of the cell center or the vicinity of the cell edge, for example. The intra-cell location information may therefore be one-bit data with the vicinity of the cell center set to one and the vicinity of the cell edge set to zero, eliminating the necessity of a complicated process thereby.

(7) Additionally, in the wireless communication system of the present invention, the intra-cell location information is either RSRP (Reference Signal Received Power) or a path-loss value.

As thus described, since the intra-cell location information is either RSRP or a path loss value, the mobile station apparatus can suppress increase of power consumption without requiring a complicated process.

(8) In addition, the base station apparatus of the present invention is a base station apparatus applied to a wireless communication system including a base station apparatus and mobile station apparatuses to provide an MBMS (Multimedia Broadcast Multicast Service), in which the base station apparatus transmits a message for aggregating the number of mobile station apparatuses requesting an MBMS to a mobile station apparatuse being served, and receives a response message corresponding to the message from the mobile station apparatus, aggregates the number of mobile station apparatuses requesting an MBMS for each intra-cell location of the mobile station apparatus, and provides an MBMS to the mobile station apparatus based on an MBMS providing method determined for the each intra-cell location.

As thus described, since the base station apparatus provides an MBMS to a mobile station apparatus based on an MBMS providing method determined for each intra-cell location of a mobile station apparatus, it becomes possible to provide an appropriate MBMS based on the intra-cell location of a mobile station apparatus, enabling effective utilization of radio resources thereby. In addition, since the process required in the mobile station apparatus only adds to the Counting response a signal based on reception power of the downlink reference signal which has always been being measured and uses it to select a providing method in the Notification, increase of power consumption can be suppressed without requiring a complicated process. Furthermore, it also becomes possible to provide optimal transmission parameters even if there are many mobile station apparatuses requesting service in the vicinity of the cell center.

(9) In addition, the base station apparatus of the present invention comprises a transmission signal processing unit which generates a transmission signal including a message for notifying at least one MBMS providing method associated with location information of a mobile station apparatus in a cell, and a transmitting unit which transmits the generated transmission signal to the mobile station apparatus.

As thus described, since the base station apparatus generates a transmission signal including a message for notifying at least one MBMS providing method associated with intra-cell location information of a mobile station apparatus, it becomes possible to provide an appropriate MBMS based on the intra-cell location of the mobile station apparatus, enabling effective utilization of radio resources thereby.

(10) In addition, the mobile station apparatus of the present invention is a mobile station apparatus applied to a wireless communication system including a base station apparatus and mobile station apparatuses to provide an MBMS (Multimedia Broadcast Multicast Service), in which the mobile station apparatus receives from the base station apparatus a message for aggregating the number of mobile station apparatuses requesting an MBMS and, when requesting an MBMS, adds intra-cell location information of its own to a response message to the message to transmit the response message added with the intra-cell location information to the base station apparatus.

As thus described, since the mobile station apparatus adds intra-cell information of its own to a response message to the message, it becomes possible for the base station apparatus to provide an appropriate MBMS based on the intra-cell location of the mobile station when an MBMS is requested, enabling effective utilization of radio resources thereby.

(11) In addition, the mobile station apparatus of the present invention comprises a Counting response signal generating unit which, upon receiving a message for aggregating the number of mobile station apparatuses requesting an MBMS from the base station apparatus, adds intra-cell information of its own to a response message corresponding to the message.

As thus described, upon receiving a message for aggregating the number of mobile station apparatuses requesting an MBMS from the base station apparatus, the mobile station apparatus adds intra-cell information of its own to a response message corresponding to the message, and whereby it becomes possible for the base station apparatus to provide an appropriate MBMS based on the intra-cell location of the mobile station, enabling effective utilization of radio resources thereby.

(12) In addition, the mobile station apparatus of the present invention comprises a Counting response signal generating unit which, upon receiving a message for aggregating the number of mobile station apparatuses requesting an MBMS from the base station apparatus, determines whether or not to transmit a response message corresponding to the message based on the intra-cell information of its own.

As thus described, since the mobile station apparatus determines whether or not to transmit a response message corresponding to a message based on intra-cell location information of its own, upon receiving a message for aggregating the number of mobile station apparatuses requesting an MBMS from a base station apparatus, it becomes possible for the base station apparatus to acquire NumE and NumC for use in determining the MBMS providing method while reducing the amount of information required by the mobile station apparatus in the Counting response.

(13) In addition, upon receiving a transmission signal including a message for notifying at least one MBMS providing method associated with intra-cell location information of a mobile station apparatus from the base station apparatus, the mobile station apparatus of the present invention selects the MBMS providing method based on the intra-cell information of its own.

As thus described, since the mobile station apparatus selects an MBMS providing method based on the intra-cell information of its own, upon receiving a transmission signal including a message for notifying at least one MBMS providing method associated with intra-cell location information of a mobile station apparatus from a base station apparatus, the base station apparatus needs not perform transmission to a mobile station apparatus in the vicinity of the cell center via PTM similarly to a mobile station apparatus at the cell edge, suppressing waste of radio resources and electric power thereby. In addition, a mobile station apparatus receiving service provision via SC-PTP needs not measure reception quality of PTM in order to switch to reception via PTM, and whereby it becomes possible to prevent increase of processes in the mobile station apparatus.

(14) In addition, the communication method of the present invention is a communication method of a wireless communication system including a base station apparatus and mobile station apparatuses to provide an MBMS (Multimedia Broadcast Multicast Service), the method comprising at least the steps of: in the base station apparatus, transmitting a message for aggregating the number of mobile station apparatuses requesting an MBMS to a mobile station apparatus being served; and in a mobile station apparatus requesting an MBMS among the mobile station apparatuses, adding intra-cell location information of the mobile station itself to a response message to the message; and transmitting the response message added with the intra-cell location information to the base station apparatus.

As thus described, since a mobile station apparatus requesting an MBMS adds intra-cell information of its own to a response message to the message, it becomes possible to provide an appropriate MBMS based on the intra-cell location of the mobile station apparatus, enabling effective utilization of radio resources thereby.

(15) In addition, the communication method of the present invention is a communication method of a wireless communication system including a base station apparatus and mobile station apparatuses to provide an MBMS (Multimedia Broadcast Multicast Service), the method comprising at least the steps of: in the base station apparatus, adding threshold information of intra-cell location of a mobile station apparatus to a message for aggregating the number of mobile station apparatuses requesting an MBMS; and transmitting the message added with the threshold information to a mobile station apparatus being served; and in a mobile station apparatus requesting an MBMS among the mobile station apparatuses, determining whether or not to respond to the message based on the threshold information of intra-cell location and intra-cell location of the mobile station itself.

As thus described, since the mobile station apparatus requesting an MBMS determines whether or not to respond to a message based on the threshold information of the intra-cell location and its own intra-cell location, it becomes possible for the base station apparatus to acquire NumE and NumC for use in determining the MBMS providing method while reducing the amount of information required by the mobile station apparatus in the Counting response.

According to the present invention, since a mobile station apparatus requesting an MBMS adds intra-cell information of its own to a response message to a message and transmits the response message added with the intra-cell location information to a base station apparatus, it becomes possible to provide an appropriate MBMS based on the intra-cell location of the mobile station apparatus, enabling effective utilization of radio resources thereby. In addition, since the process required in the mobile station apparatus only adds to the Counting response a signal based on reception power of the downlink reference signal which has always been being measured and uses it to select a providing method in the Notification, increase of power consumption can be suppressed without requiring a complicated process. Furthermore, it also becomes possible to provide optimal transmission parameters even if there are many mobile station apparatuses requesting service in the vicinity of the cell center.

### Brief Description of the Drawings

FIG. 1 is a block diagram illustrating an exemplary receiving device of the UE1 according to the embodiment of the present invention;
FIG. 2 is a block diagram illustrating an exemplary transmitting device of the UE1 according to the embodiment of the present invention;
FIG. 3 is a block diagram illustrating an exemplary receiving device of an eNB3 according to the embodiment of the present invention;
FIG. 4 is a block diagram illustrating an exemplary transmitting device of an eNB3 according to the embodiment of the present invention;
FIG. 5 is a schematic block diagram illustrating the overall user plane architecture of providing an MBMS including the UE1 and the eNB3 according to the embodiment of the present invention;
FIG. 6 is a sequence chart of providing an MBMS based on the user plane architecture according to the embodiment of the present invention;
FIG. 7 is a flow chart illustrating an exemplary procedure of a Counting response process in the UE1 according to a first embodiment of the present invention;
FIG. 8 is a flow chart which an exemplary procedure of an MBMS providing method determination process in an NW according to the first embodiment of the present invention;
FIG. 9 is a flow chart illustrating an exemplary procedure of a reception setting process in the UE1 according to the first embodiment of the present invention;
FIG. 10 is a flow chart illustrating an exemplary procedure of the Counting response process in the UE1 according to a second embodiment of the present invention;
FIG. 11 is a flow chart illustrating an exemplary procedure of the Counting response process in the UE1 according to a third embodiment of the present invention;
FIG. 12 illustrates an exemplary configuration of a downlink radio frame in EUTRA; and
FIG. 13 illustrates the overall configuration of a wireless communication system.

### Best Modes for Carrying Out the Invention

### [First embodiment]

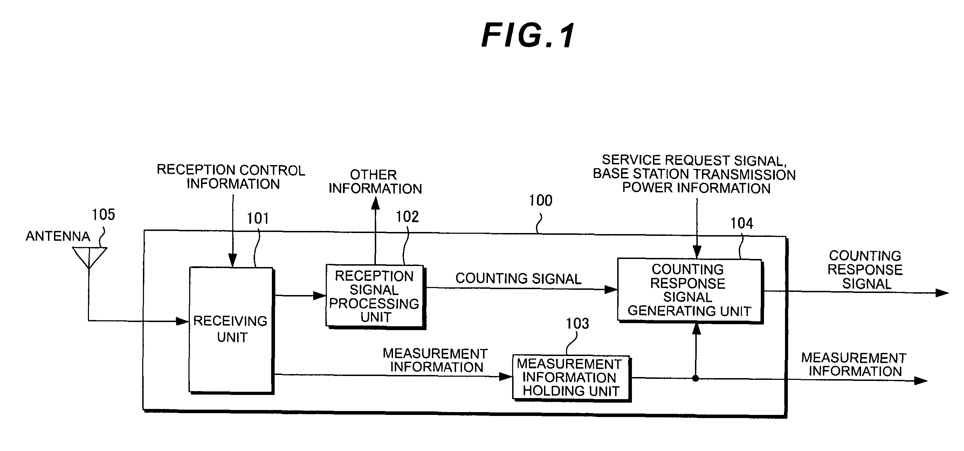

A first embodiment of the present invention will be explained below, referring to FIGS. 1 to 9.

FIG. 1 is a block diagram illustrating an exemplary receiving device of a mobile station apparatus (expressed as UE in the following) 1 according to an embodiment of the present invention. The receiving device 100 includes a receiving unit 101, a reception signal processing unit 102, a measurement information holding unit 103, a Counting response signal generating unit 104, and an antenna 105. A reception signal (transmission signal from the base station apparatus (expressed as eNB in the following) 3) is received in the receiving unit 101 via the antenna 105.

In the receiving unit 101, the reception signal is demodulated based on reception control information indicating the channel schedule. The reception control information includes information related to demodulation such as reception timing with regard to each channel, multiplexing method, resource allocation information, or scramble release codes. The receiving unit 101 demodulates and decodes the reception signal for each channel according to the reception control information, and outputs it to the reception signal processing unit 102. In addition, the receiving unit 101 outputs a physical cell ID detected from a synchronization channel included in the reception signal, reception quality of the downlink reference signal, and area information or base station transmission power information acquired from the broadcast information to the measurement information holding unit 103 as measurement information. The measurement information holding unit 103 outputs the measurement information held therein to an higher layer (not shown) or the Counting response signal generating unit 104.

The reception signal processing unit 102 processes the input signal from the receiving unit 101 for each channel and, if a Counting signal of the MBMS is included, outputs the signal to the Counting response signal generating unit 104. Explanation of traffic data or downlink control data of other users which are output to individual process blocks as other information will be omitted since they are irrelevant to the present invention.

Upon detecting a Counting signal, the Counting response signal generating unit 104 determines whether or not to generate a Counting response signal based on the Probability factor, the service request signal and the base station transmission power information acquired from the higher layer, and the measurement information acquired from the measurement information holding unit 103 and, if so, generates the Counting response signal and outputs it to a transmitting device 200 described below.

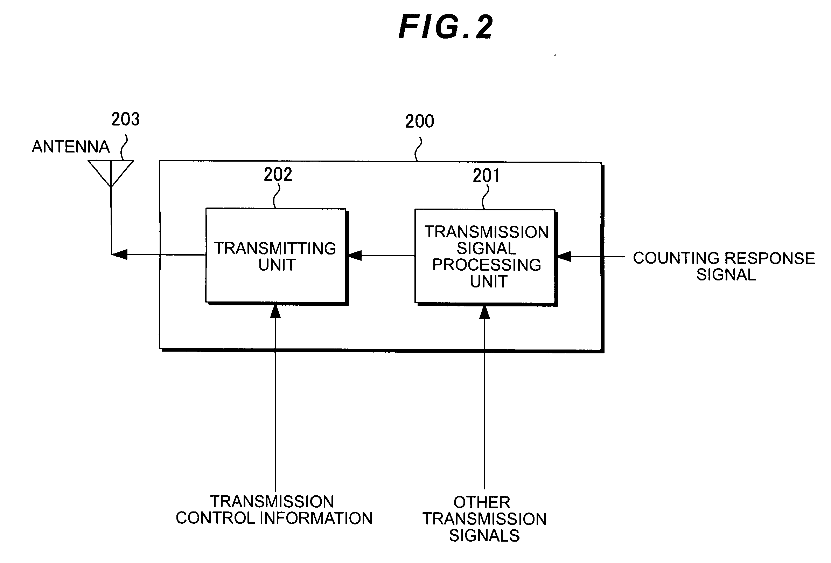

FIG. 2 is a block diagram illustrating an exemplary transmission device of the transmitting device of the UE1 according to the embodiment of the present invention. The transmitting device 200 includes a transmission signal processing unit 201, a transmitting unit 202, and an antenna 203. A Counting response signal is input to the transmission signal processing unit 201 according to an instruction from the higher layer at an appropriate timing. The transmission signal processing unit 201 performs appropriate scheduling for the Counting response signal and other transmission signals. Other transmission signals refer to uplink user traffic data and uplink control data, uplink reference signals, or the like. The signal output from the transmission signal processing unit 201 based on scheduling is output from the transmitting unit 202 via the antenna 203 as a transmission signal according to transmission control information. The transmission control information includes information related to transmission timing with regard to each channel, multiplexing method, resource allocation information, and modulation. In FIGS. 1 and 2, since other components of the UE1 are irrelevant to the present embodiment, explanation thereof will be omitted.

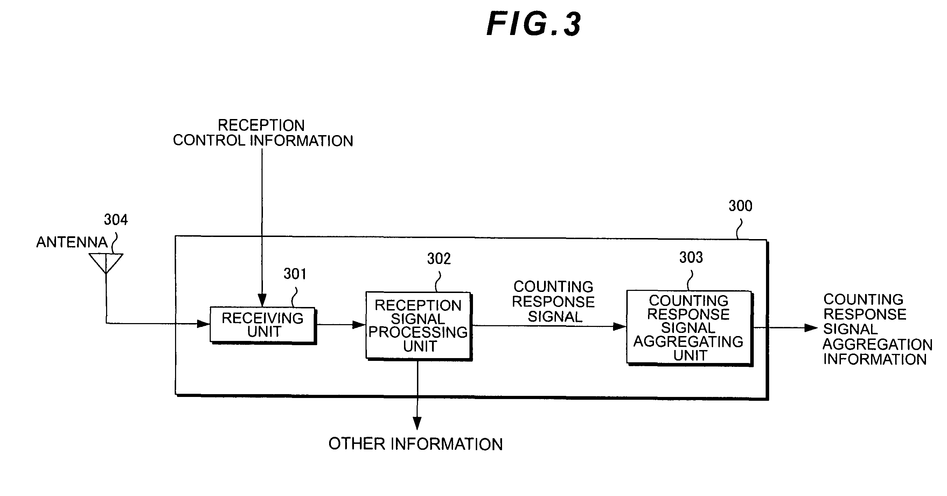

FIG. 3 is a block diagram illustrating an exemplary receiving device of the eNB3 according to the embodiment of the present invention. The receiving device 300 includes a receiving unit 301, a reception signal processing unit 302, a Counting response signal aggregating unit 303, and an antenna 304. The reception signal (transmission signal from the UE1) is received by the receiving unit 301 via the antenna 304. The receiving unit 301 demodulates the reception signal based on the reception control information indicating the channel schedule. The reception control information includes information related to reception timing with regard to each channel for each UE1, multiplexing method, resource allocation information and demodulation. The receiving unit 301 demodulates and decodes the reception signal for each channel according to the reception control information, and outputs it to the reception signal processing unit 302.

The reception signal processing unit 302 divides the input signal for each UE1 and processes it for each channel as appropriate. If the input signal is a Counting response signal, the Counting response signal is output to the Counting response signal aggregating unit 303. Signals other than the Counting response signal processed in the reception signal processing unit 302 such as user traffic data, uplink control data, and other control messages, for example, are input to individual process blocks as other information, however, explanation thereof will be omitted since they are irrelevant to the present invention. The Counting response signal aggregating unit 303 aggregates the Counting response signal for each user and notifies the count result to the higher layer.

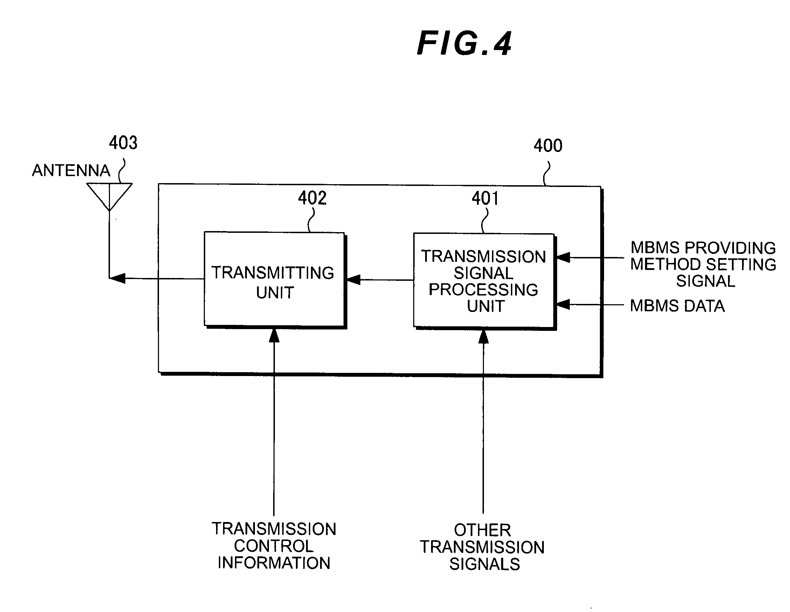

FIG. 4 is a block diagram illustrating an exemplary transmitting device of the eNB3 according to the embodiment of the present invention. The transmitting device 400 includes a transmission signal processing unit 401, a transmitting unit 402, and an antenna 403. An MBMS providing method setting signal, MBMS data and other transmission signals are input to the transmission signal processing unit 401 from the higher layer. The transmission signal processing unit 401 generates, based on the MBMS providing method setting signal, a transmission signal of the MBMS data using any of the providing methods of MBSFN, PTM, and SC-PTP, or a combination of these methods, and performs scheduling with other transmission signals included therein. Other transmission signals refer to downlink user traffic data, downlink control data, or downlink reference signal of each UE1. The data output from the transmission signal processing unit 401 based on the scheduling is output from the transmitting unit 402 via the antenna 403 as a transmission signal according to a transmission control information. The transmission control information includes information related to transmission timing with regard to each channel, multiplexing method, resource allocation information, and modulation. In FIGS. 3 and 4, other components of the eNB3 are omitted since they are irrelevant to the present invention.

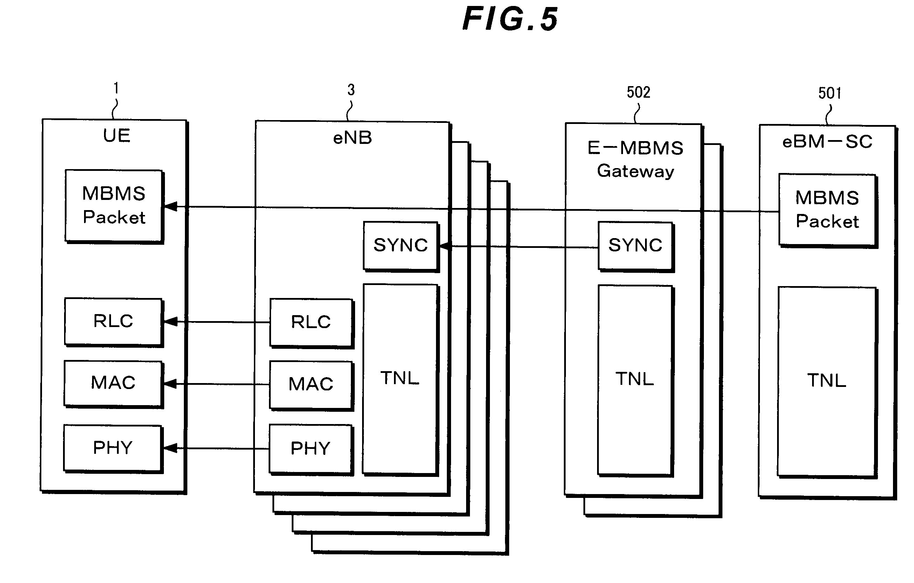

FIG. 5 is a schematic block diagram illustrating the overall user plane architecture of providing an MBMS including the UE1 and the eNB3 according to the embodiment of the present invention. In FIG. 5, the UE1 is a mobile station apparatus, the eNB3 is a base station apparatus, the eBM-SC (evolved Broadcast/Multicast-Service Center) 501 is the source of the MBMS traffic, and the E-MBMSGW (E-MBMS Gateway) 502 is a logic entity which distributes the traffic to various eNB3s in an MBMS provision area. The E-MBMS GW 502 may be implemented on a device on another network. In FIG. 5, an MBMS packet generated in the eBM-SC 501 is sent to each eNB3 through the E-MBMSGW 502, and each eNB3 holds the MBMS packet until a timing (radio frame) has been reached to transmit the MBMS packet according to a SYNC protocol sent from the E-MBMSGW 502, and transmits it to the UE1 according to the transmission timing with MBSFN or MC-PTM.

Additionally, in the control plane, although not shown, an MCE (MBMS Coordination Entity) which controls all the eNB3s in a provision area exists as an entity so that the same resource block is allocated to an arbitrary service in an area where the MBMS is provided with MBSFN or MC-PTM, and control is performed so that the transmission timing in the radio frame coincides with the MBMS provision area. Since the MCE is a logical entity, the MCE may be implemented on the eNB3, or on another device on the network. The MCE is controlled by an MME (Mobility Management Entity), and the control signal of an MBMS session from the E-MBM SGW 502 is sent to the MCE via the MME.

In addition, when an MBMS packet is transmitted via SC-PTP or SC-PTM, the E-MBM SGW 502 may generate a packet for each UE1 and transmit to each UE1 as a normal packet, or the eNB3 may perform scheduling of a radio resource and transmit, to the UE1, the MBMS packet as a packet addressed to the UE1. The MBMS is provided to a user according to the above-mentioned architecture.

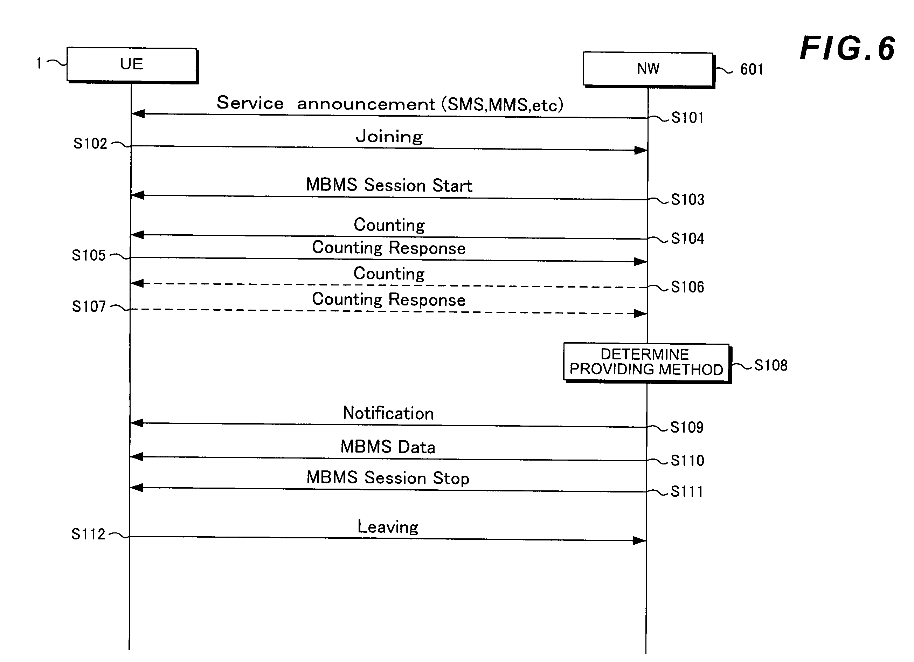

FIG. 6 is a sequence chart of providing an MBMS based on the user plane architecture according to an embodiment of the present invention. In FIG. 6, the UE1 is a mobile station apparatus and the NW 601 is a network including a plurality of (MCE-implementing) eNB3s, MMEs, S-GWs (Serving Gateway), and P-GWs (PDN Gateway). The -MBM SGW 502 may exist in the above-mentioned NW 601 and, if it belongs to another network, the MBMS is provided to the UE1 through the MME and the P-GW of the NW 601.

First, an MBMS provider uses an SMS (Short Message Service) or an MMS (Multimedia Message Service) to perform Service announcement to the UE1 (step S101). The UE1 may be required to perform Subscription preliminarily in order to receive the Service announcement from the MBMS provider. The Service announcement includes information such as service content or provision time of an MBMS including a plurality of sessions, containing a schedule for several hours or several days. The UE1 which received the Service announcement performs Joining (step S102) indicating that it will receive one or more MBMS Bearer services when requesting a service. As the Joining, The UE1 transmits to the NW 601 a Join message having included therein at least an IP multicast address which can identify the MBMS Bearer service to be received. The UE1 may perform the Joining before starting a Session described below, or perform it during the Session.

Next, the NW 601 performs MBMS session start when transmission of the MBMS data has become possible to establish an MBMS Bearer for receiving MBMS data of a session started for the UE1 (step S103). Next, the NW 601 transmits a Counting signal to the UE1 if it required to perform Counting (step S104), and receives a Counting Response from the UE1 (step S105). In addition, it changes the Probability Factor and performs the Counting process again whenever necessary for a case such that there is no Counting response (steps S106 and S107).

Next, the NW 601 determines the MBMS providing method (step S108), and performs Notification to the UE1. In the Notification, Bearer resources for MBMS transmission are allocated to the UE1 (step S109). The NW 601 can determine allocation information of Bearer resources for MBMS transmission to be notified in the Notification based on the Counting response. The UE1 which received the Notification starts receiving one or more MBMS Bearer services in order to receive the MBMS data. Subsequently, the NW 601 transmits the MBMS data using the resources allocated to the UE1 (step S110).

If the NW 601 determines, after MBMS data transmission in one session has finished, that there is sufficient time to release the MBMS Bearer until the next session, the NW 601 transmits SessionStop to the UE1 and releases the MBMS Bearer resources of the session of the UE1 (step S111). In addition, the UE1 requesting to stop reception of the MBMS performs Leaving to the NW 601 (step S112). As the Leaving, the UE1 transmits to the NW 601 a Leave message having included therein at least an IP multicast address which can identify the MBMS Bearer service of which it desires to stop reception. An MBMS is provided to the UE1 by the above sequence.

Next, Counting and determination of the providing method in the above procedure of the present embodiment will be described in detail. In the present embodiment, location information of the UE1 in the cell is newly added to the conventional Counting response.

Positional information in a cell is information indicating whether at least the UE1 is in the vicinity of the cell center or at the cell edge. Whether the UE1 is in the vicinity of the cell center or in the vicinity of the cell edge may be determined by comparing, for example, the distance between two points calculated from the location information calculated by GPS and the location information of the eNB3 included in the broadcast information with a predetermined threshold value or, without being limited to physical location information, may be determined by comparing, with a predetermined threshold, the path loss value, the RSRP itself, or reception quality (RSRQ) of the reference signal calculated from the reception power (RSRP) of a downlink reference signal received by the UE1 and the transmission power information (base station transmission power information) included in the broadcast information. In the present embodiment, a case of using the path loss value will be explained. Any method other than that disclosed in the present invention may be used provided that location information in the cell can be acquired, and it is also possible to acquire the location information in the cell using, for example, the Location Service (LCS) in a future mobile communication system.

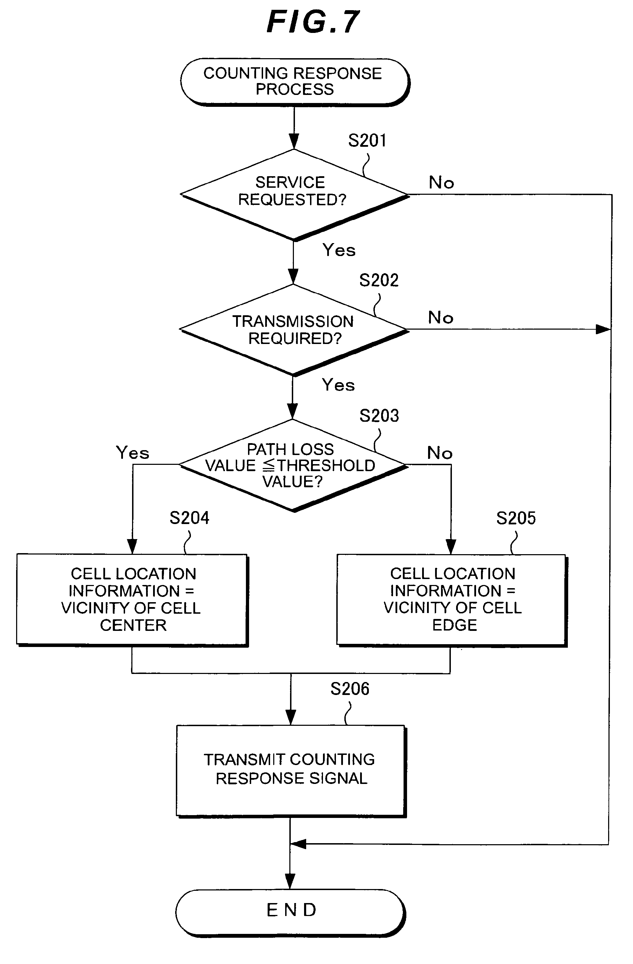

FIG. 7 is a flow chart illustrating an exemplary procedure of the Counting response process in the UE1 according to the first embodiment of the present invention. Upon receiving a Counting signal from the NW 601 (typically the eNB3), the UE1 determines whether or not a service is requested in the Counting response signal generating unit 104 shown in FIG. 1, based on the service request signal input from the higher layer (step S201). When no service is being requested, the UE1 terminates the flow. If a service is being requested, the UE1 determines whether or not it will transmit a Counting response signal based on the Probability factor included in MBMS ACCESS INFORMATION (step S202). The UE1 terminates the flow is it will not perform transmission.

In the case of transmitting a Counting response signal, the UE1 calculates the path loss value from the base station transmission power information input from the higher layer and the measurement result of reception power of the downlink reference signal held in the measurement information holding unit 103, and compares the path loss value with a predetermined threshold value (step S203). Here, the predetermined threshold value may be preliminarily included in the broadcast information from the eNB3, or may be included in the Counting signal. In addition, the base station transmission power information is preliminarily notified from the eNB3 by the broadcast information. If, as a result of comparison between the calculated path loss value and the predetermined threshold, the path loss value is less than the threshold, a code indicating the vicinity of the cell center is set as the intra-cell location information (step S204). If the path loss value is not less than the threshold, a code indicating the vicinity of the cell edge is set as the intra-cell location information (step S205).

Here, the code of the intra-cell location information may be any code provided that it is preliminarily determined by the eNB3 and the UE1. For example, it may be one-bit data with the vicinity of the cell center set to one and the vicinity of the cell edge set to zero, or may be expressed by setting two types of random access preambles for use in transmitting a Counting response signal and selecting one of the preambles to be used. Alternatively, only the UE1 in the vicinity of the cell edge may add the data indicating the vicinity of the cell edge to the Counting response signal and transmit it. Next, the code which has been set at step S204 or S205 is input to the transmission signal processing unit of the transmitting device of FIG. 2 in a manner included in the Counting response signal (step S206). The foregoing is the procedure of the Counting response process in the UE1. Next, a determination procedure of an MBMS providing method in the NW 601 receiving the Counting response will be explained.

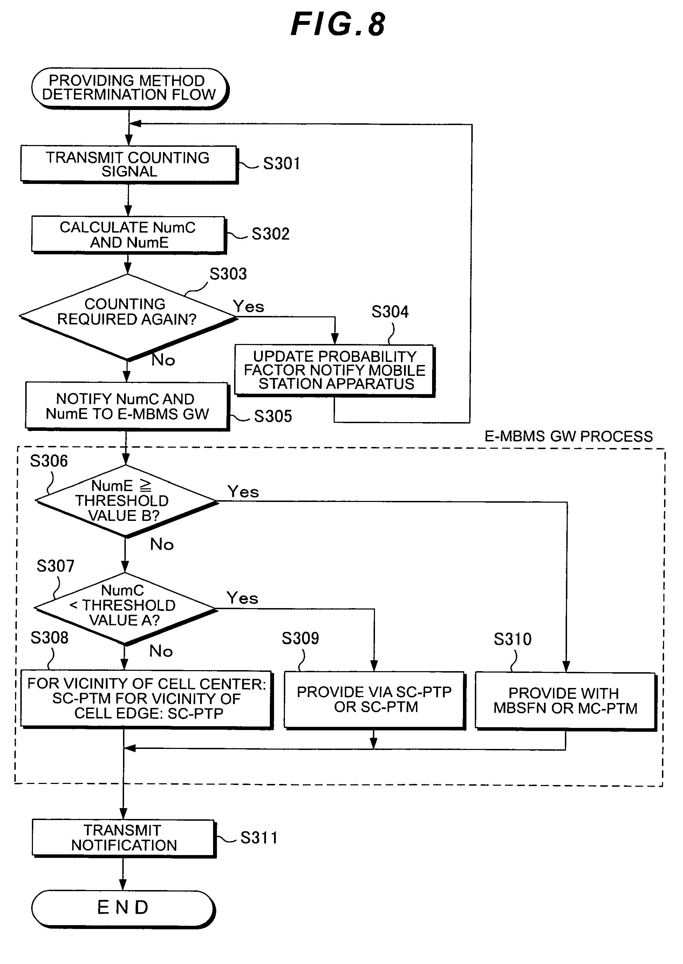

FIG. 8 is a flow chart illustrating an exemplary procedure of the MBMS providing method determination process in the NW 601 according to the first embodiment of the present invention. The eNB3 in the NW 601 first transmits the Counting signal to the UE1 under control thereof (step S301). The eNB3 collects, in the Counting response signal aggregating unit 303, the Counting response signals transmitted from the UE1 and counts, as the intra-cell location information, the number of UEs (NumC) that has returned the vicinity of the cell center and the number of UEs (NumE) that has returned the vicinity of the cell edge (step S302). Next, it determines whether or not Counting is required again (step S303).

If Counting is required, the eNB3 updates the value of the Probability factor (step S304), returns to step S301 and performs the Counting again. Here, one or both of the NumC and NumE counted at the above-mentioned step S302 being 0 can be given as a case where Counting is required again. If Counting again is unnecessary, information of the NumC and NumE aggregated in the eNB3 is notified to the E-MBM SGW 502 (step S305).

Steps S306 to S310 are processes in the E-MBM SGW 502, in which the E-MBM SGW 502 aggregates NumC and NumE notified from each eNB3 to compare with a predetermined threshold, and sets, based on the result of comparison, a method of providing an MBMS to the UE1 in the vicinity of the cell center and a method of providing an MBMS to the UE1 in the vicinity of the cell edge. As an exemplary setting, by transmitting with MBSFN or MC-PTM instead of SC-PTP or SC-PTM if NumE ≥ threshold value B holds (step S306), i.e., if the number of UE1s requesting a service in the vicinity of the cell edge is not less than a certain value, the UE1 in the vicinity of the cell center can also receive the service while maintaining the reception quality at the cell edge (step S310).

In addition, if NumC < threshold value A and NumE < threshold value B hold (steps S306 and S307), i.e., if the number of UE1s requesting service in a cell is less than a certain value, efficiency of resources can be expected to increase by setting optimal transmission parameters (modulation method and coding rate) for each UE1 or for a group of UEs in the vicinity of the cell center and a group of UEs in the vicinity of the cell edge and transmitting via SC-PTP or SC-PTM in order to prevent drop of resource usage efficiency due to transmission with MBSFN or MC-PTM (step S309).

In addition, if NumC ≥ threshold value A and NumE < threshold value B hold (steps S306 and S307), i.e., if there are many UE1s requesting a service in the vicinity of the cell center, efficiency of resource can be expected to increase by transmitting to a group of UEs in the vicinity of the cell center with SC-PTM having a high transmission rate and transmitting to the UE1 or a group of UEs in the vicinity of the cell edge via SC-PTP or SC-PTM having a low transmission rate in order to prevent drop of resource usage efficiency due to transmission with MBSFN or MC-PTM having set therein transmission parameters to allow reception in the vicinity of the cell edge. Power saving of the UE1 can also be expected due to shortened reception processing time of the UE1 in the vicinity of the cell center by appropriately setting transmission parameters (step S308).

Next, the Notification to the UE1 from the eNB3 is performed based on the MBMS providing method which has been set at steps S306 to S310 (step S311). Two types of providing methods notified in the Notification are included if the methods differ for the UE1 in the vicinity of the cell center and for the UE1 in the vicinity of the cell edge. In other words, although either a PTM information acquisition request signal (acquirePTM-RBInfo) or a PTP connection instruction signal (requestPTPRB) is notified from the eNB3 to the UE1 conventionally, the present embodiment has introduced a technique of sending the above-mentioned signals separately to the UE1 in the vicinity of the cell center and the UE1 in the vicinity of the cell edge, or a technique of expanding the types of the above-mentioned signals and using a single signal which indicates instructions to both the UE1 in the vicinity of the cell center and the UE1 in the vicinity of the cell edge (e. g. , acquirePTM-RBInfoForCellCenter-requestPTPRBForCellEdge, etc.).

The MBMS providing method is determined by the above-mentioned flow, and Bearer resources for transmitting the MBMS is notified to the UE1 by the Notification. If a plurality of providing methods described above is included in the Notification, the UE1 selects a providing method based on intra-cell information of its own and performs a reception setting according to the selected providing method.

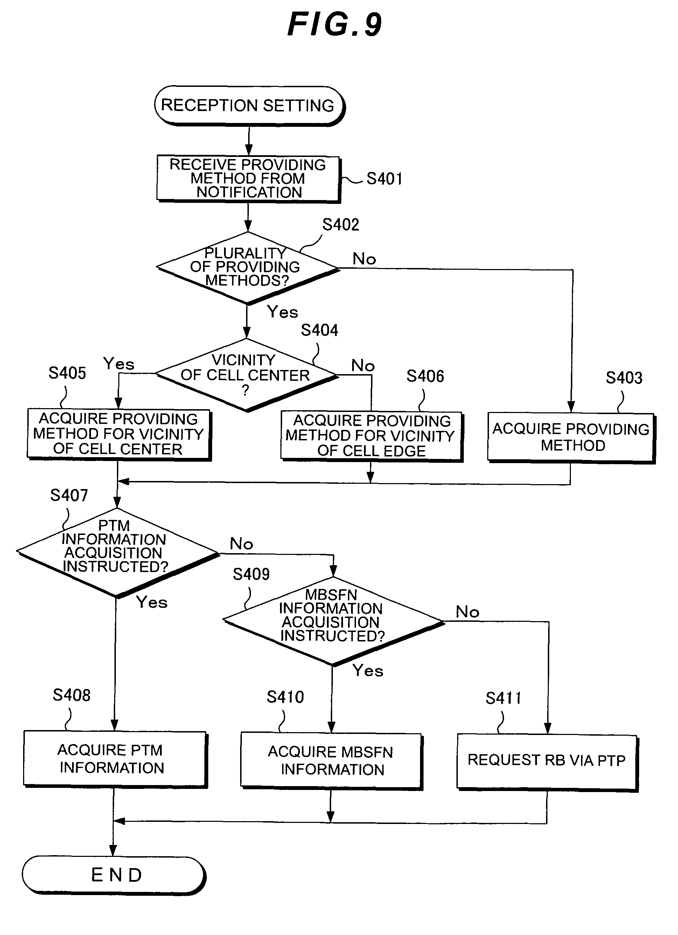

FIG. 9 is a flow chart illustrating an exemplary procedure of the reception setting process in the UE1 according to the first embodiment of the present invention. In FIG. 9, the UE1 requesting a service first acquires a message including the providing method in the Notification from the eNB3 (step S401). The UE1 then determines whether or not a plurality of providing methods is included in the message (step S402). If a single providing method is included, the UE1 acquires the providing method (step S403). If a plurality of providing methods is included, the UE1 determines whether or not the station itself is in the vicinity of the cell center (step S404). The determination method is the same as that in the processing for the Counting response. If the station itself is in the vicinity of the cell center, the UE1 acquires the providing method for the vicinity of the cell center (step S405). If the station itself is in the vicinity of the cell edge, the UE1 acquires the providing method for the vicinity of the cell edge (step S406).

Next, it is determined whether or not the providing method acquired in any of steps S406 to S404 is a PTM information acquisition instruction (step S407). If the providing method is a PTM information acquisition instruction, information required for receiving a service is acquired from each PTM RB INFORMATION included in the MCCH (step S408). If the providing method is not a PTM information acquisition instruction, it is determined whether or not the providing method is an MBSFN information acquisition instruction (step S409). If the providing method is an MBSFN information acquisition instruction, information related to the MBSFN setting included in the MCCH or the broadcast information is acquired, and information required for receiving the service is acquired (step S410).

If it is determined at step S409 that the providing method is not an MBSFN information acquisition instruction (or it is a PTP connection instruction), the UE1 requests a Bearer for receiving a service by SC-PTP to the eNB3, using an RRCConnectionRequest message of the UL-CCCH or a message of the UL-DCCH (step S411). The eNB3 which has received the request provides the UE1 with the information required for receiving the service, using the RRCConnectionSetup message of the DL-CCCH or a message of the DL-DCCH. The UE1 which has received the message from the eNB3 performs the reception setting based on the information and transmits a Complete message via the UL-DCCH. The foregoing is the reception setting processing procedure in the UE1.

According to the present embodiment, it becomes possible to provide an appropriate MBMS based on the intra-cell location of the UE1, enabling effective utilization of radio resources thereby. In addition, since the process required in the UE1 only adds to the Counting response a signal based on reception power of the downlink reference signal which has always been being measured and uses it to select a providing method in the Notification, increase of power consumption can be suppressed without requiring a complicated process. In addition, if there are a plurality of UE1s having poor MBMS reception quality, the method of the patent document 1 cannot optimize the transmission parameters for the UE1 in the vicinity of the cell center because it performs a control to suppress the number of UE1s having poor reception quality not to exceed a certain value by increasing transmission power of the eNB3. The control by the present embodiment, on the contrary, can provide optimal transmission parameters even if there are many UE1s requesting a service in the vicinity of the cell center.

Although the explanation of the present embodiment has been provided using a specific RRC message, it is not limited to the using only the message of the above explanation, provided that its object can be achieved. In addition, although an RB is requested from the UE1 via PTP at step S411 of FIG. 9 in the above explanation, reception setting of PTP may be performed by the initiative of the base station using a message such as RRCConnectionReconfiguration from the eNB3 without a request from the UE1.

### [Second Embodiment]

In the above-mentioned first embodiment, a case has been described where a signal indicating the intra-cell location is included in the Counting response from the UE1. The present embodiment describes a case where threshold information related to the intra-cell location of the UE1 is included in the Counting so that can request a Counting response to the UE1. The eNB3 and the UE1 of the present embodiment respectively have the same configurations as those shown in FIGS. 1, 2, 3, and 4 of the first embodiment.

Counting and determination of the providing method in the present embodiment will be described in detail. In the present embodiment, threshold information of the intra-cell location for determining whether or not the UE1 newly transmits a Counting response is added to the conventional Counting. The threshold information is, for example, information indicating "report when the path loss value is not less than a certain threshold value" and "report when the path loss value is less than a certain threshold value" (either "not less than" or "less than" the threshold to be compared). In addition, it is also possible to use reference signal reception power (RSRP) or reference signal reception quality (RSRQ) instead of the path loss value as described above.

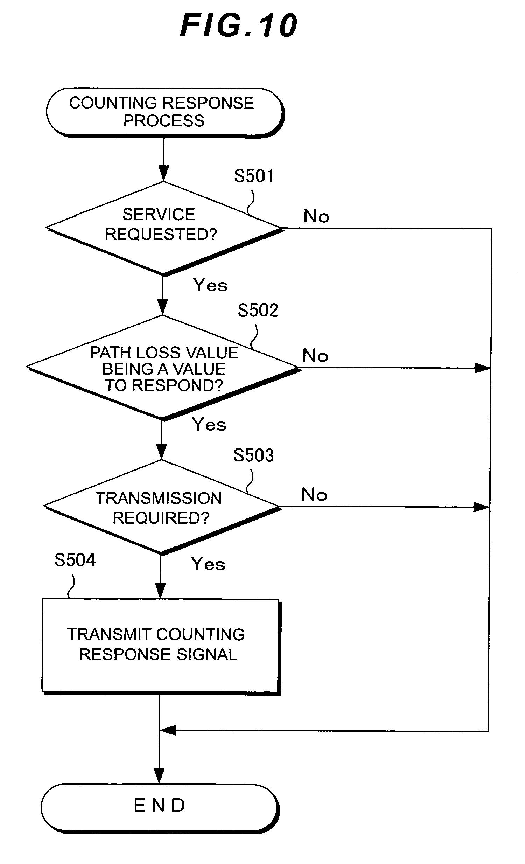

FIG. 10 is a flow chart illustrating an exemplary procedure of the Counting response process in the UE1 according to the second embodiment of the present invention. Upon receiving a Counting signal including the threshold information, the UE1 determines whether or not the Counting response signal generating unit 104 shown in FIG. 1 is requesting a service based on the service request signal input from the higher layer (step S501). If no service is requested, the flow is terminated. If a service is requested, the UE1 calculates a path loss value from the base station transmission power information input from the higher layer and the result of reception power measurement of the downlink reference signal held in the measurement information holding unit 103, and determines whether or not the station itself transmits a Counting response, based on the threshold information included in the Counting signal (step S502). If it is not assumed to transmit a Counting response, the flow is terminated.

If the station itself transmits a Counting response, the UE1 determines whether or not the station itself transmits a Counting response signal, based on the Probability factor included in MBMS ACCESS INFORMATION (step S503). If it does not transmit a Counting response signal, the flow is terminated. If the station itself transmits a Counting response signal, the UE1 inputs the Counting response signal to the transmission signal processing unit of the transmitting device shown in FIG. 2 (step S504). The foregoing is the procedure of the Counting response process in the UE1 in the present embodiment. Here, the NW 601 may notify the threshold information using the broadcast information instead of the Counting signal. In addition, the NW 601 may notify the threshold information using individual signaling instead of the Counting signal.

Next, a determination procedure of an MBMS providing method in the NW 601 receiving the Counting response will be explained. Although the determination procedure of the MBMS providing method in the present embodiment is similar to that in the first embodiment, only the process relating to acquisition of NumE and NumC is different and therefore acquisition of NumE and NumC will be explained. Although, in the first embodiment, NumE and NumC are calculated based on the intra-cell location information included in the response from the UE1. the present embodiment first adds the threshold information to the Counting signal, and causes only the UE1 having a path loss value less than a certain threshold value to respond. NumE can be calculated thereby so that the process of step S306 shown in FIG. 8 can be performed. If the process of step S307 is required, the procedure causes only the UE1 having a path loss value not less than a certain threshold value to respond, calculates NumC, and perform the process of step S307. Since reception setting of the Notification and the UE1 based on the above determination is similar to that of the first embodiment, explanation is omitted thereof.

According to the present embodiment, it becomes possible to acquire NumE and NumC for use in determining an MBMS providing method while reducing the amount of information required for the Counting response, whereby an effect similar to that with the first embodiment is acquired. In addition, it becomes possible to divide the UE1s assumed to transmit a response, whereby line congestion at the time of responding can be reduced even if the Probability factor value is set high.

### [Third Embodiment]

In the above-mentioned second embodiment, a case has been described where threshold information of the intra-cell location of the UE1 is included so that the NW 601 requests a Counting response to the UE1. The present embodiment describes a case where the NW 601 includes a plurality of different Probability factors in the intra-cell location of the UE1. The eNB3 and the UE1 of the present embodiment respectively have the same configurations as those shown in FIGS. 1, 2, 3, and 4 of the first embodiment.

Counting and determination of the providing method in the present embodiment will be described in detail. In the present embodiment, the types of Probability factors to be included in MBMS ACCESS INFORMATION are increased. One is the Probability factor used when the loss value is not less than a certain threshold value, and one is the Probability factor used when the path loss value is less than a certain threshold value. In addition, the threshold may be included in MBMS ACCESS INFORMATION, or may be preliminarily broadcasted as another message. In other words, when using two types of Probability factors for the UE1 in idle state and the UE1 in connection state, different Probability factors are respectively set based on the path loss values, resulting in a total of four Probability factors. In addition, it is also possible to use the reference signal reception power (RSRP) instead of the path loss value.

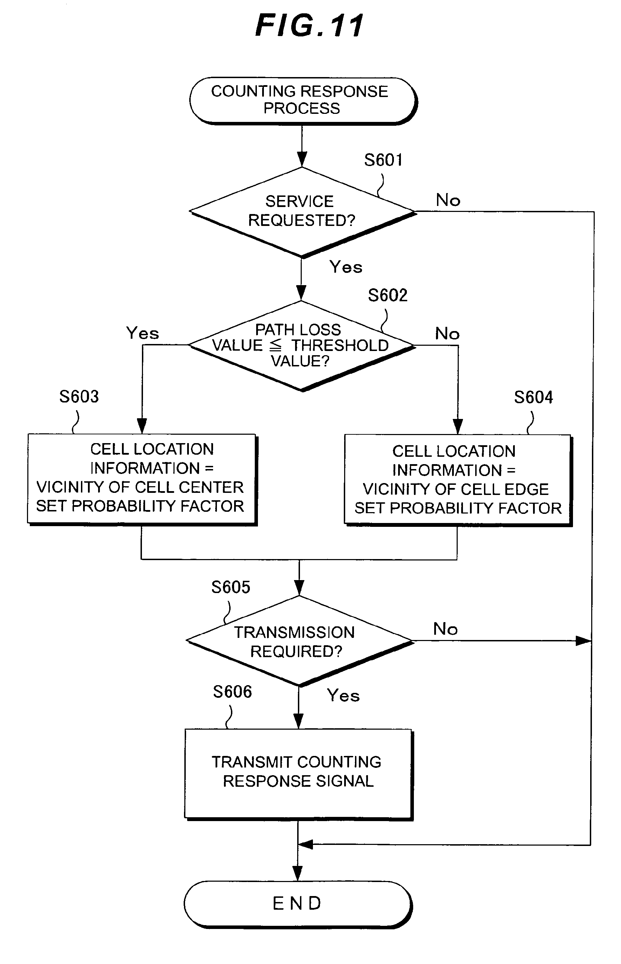

FIG. 11 is a flow chart illustrating an exemplary procedure of the Counting response process in the UE1 according to the third embodiment of the present invention. Upon receives a Counting signal including the threshold information, the UE1 determines whether or not the Counting response signal generating unit 104 shown in FIG. 1 is requesting a service based on the service request signal input from the higher layer (step S601). If no service is requested, the flow is terminated. If a service is requested and, as a result of comparison between the path loss value and a predetermined threshold value (step S602), the path loss value is less than the threshold value, the UE1 sets a code indicating the vicinity of the cell center as the intra-cell location information, and also sets the Probability factor to a value for the vicinity of the cell center (step S603). If the path loss value is not less than the threshold value, the UE1 sets a code indicating the vicinity of the cell edge as the intra-cell location information, and also sets the Probability factor to a value for the vicinity of the cell edge (step S604).

Next, the UE1 determines whether or not the station itself transmits a Counting response signal, based on the Probability factor selected from the path loss values selected at step S603 or step S604 (step S605). If it does not transmit, the flow is terminated. If the station itself transmits a Counting response signal, the UE1 inputs the Counting response signal, with the code set at step S603 or step S604 included therein, to the transmission signal processing unit 201 of the transmitting device of FIG. 2 (step S606). The foregoing is the procedure of the Counting response process in the UE1 in the present embodiment.

Next, a determination procedure of ad MBMS providing method in the NW 601 receiving the Counting response will be explained. Since the determination procedure of an MBMS providing method in the present embodiment differs only in the process relating to acquisition of NumE and NumC similarly to the second embodiment, acquisition of NumE and NumC will be explained. First, setting the two Probability factors in the present embodiment to the same value provides a similar result to that of the first embodiment so that NumE and NumC can be acquired. Alternatively, setting one of the two Probability factors to 0, in other words, a case where the responding UE1 does not exist in either the vicinity of the cell center or in the vicinity of the cell edge, provides a similar result to that of the second embodiment. However, the present embodiment is different in that a code indicating the cell location information is transmitted in a manner included in the Counting response signal, similarly to the first embodiment.

With a setting other than that described above, the Probability factor for calculating NumE can be gradually raised to reduce the frequency of repeating re-Counting by setting the response probability for the vicinity of the cell edge higher than for the vicinity of the cell center, and line congestion at the time of responding can be reduced by lowering the response probability for the vicinity of the cell center. If there is no response for the vicinity of the cell center, the number of UE can be efficiently calculated by adversely lowering the response probability for vicinity of the cell edge and raising the response probability for the vicinity of the center. According to the present embodiment, the number of Counting times required for calculating NumC and NumE can be reduced, whereby line congestion at the time of responding can be reduced.

The embodiments described above are only illustrative and can be implemented by a variety of variations and substitutions. Although the mobile station and base station of the embodiments have been described using functional block diagrams for illustration purposes, control of the UE1 and the eNB3 may be performed by recording a program for realizing the functions of respective parts of the eNB3 and the UE1 or a part of such functions on a computer-readable recording medium, and causing a computer system to read and execute the program recorded on the recording medium. The "computer system" mentioned here is assumed to include an Operating System and hardware such as peripheral devices.

In addition, the "computer-readable recording medium" refers to a portable medium such as a flexible disk, an Magneto-Optical disk, a ROM, a CD-ROM or the like, or a storage device such as a hard disk built in the computer system. Furthermore, the "computer-readable recording medium" is assumed to include those which hold a program dynamically for a short time such as a communication line when transmitting the program via a network such as the Internet or a communication line such as a phone line, and those which hold a program for a certain period such as a volatile memory inside a computer system that works as a client and a server. In addition, the program may be one that realizes a part of the above-mentioned functions, or one that can realize the above-mentioned functions by a combination with a program which has been already recorded in the computer system.

In addition, each function block used in each embodiment may be implemented as an LSI which is typically an integrated circuit. Each function block may be individually implemented as a chip, or a part or the whole of the function block may be integrated into a chip. In addition, the technique of fabricating an integrated circuit may be realized by a dedicated circuit or a general-purpose processor without being limited to an LSI. Additionally, when technology of fabricating an integrated circuit replacing an LSI appears due to progress of semiconductor technology, an integrated circuit based on that technology can also be used.

Although embodiments of the invention have thus been described in detail above referring to the drawings, specific configurations are not limited to the embodiments and designs in a range that does not deviate from the spirit of the invention are included in the appended claims.

### [Reference Numerals]

- 1: mobile station apparatus (UE)
- 3: eNB
- 100: receiving device
- 104: Counting response signal generating unit
- 200: transmitting device
- 300: receiving device
- 303: Counting response signal aggregating unit
- 400: transmitting device
- 401: transmission signal processing unit
- 402: transmitting unit

## Claims

1. A wireless communication system including a base station apparatus and mobile station apparatuses to provide an MBMS (Multimedia Broadcast Multicast Service), wherein
said base station apparatus transmits a message for aggregating the number of mobile station apparatuses requesting an MBMS to a mobile station apparatus being served; and
among said mobile station apparatuses, the mobile station apparatus requesting an MBMS adds intra-cell location information of the mobile station itself to a response message to said message and transmits the response message added with said intra-cell location information to said base station apparatus.

2. A wireless communication system including a base station apparatus and mobile station apparatuses to provide an MBMS (Multimedia Broadcast Multicast Service), wherein
said base station apparatus adds threshold information of intra-cell location of the mobile station apparatus to a message for aggregating the number of mobile station apparatuses requesting an MBMS and transmits the message added with said threshold information to the mobile station apparatus being served, and
among said mobile station apparatuses, the mobile station apparatus requesting an MBMS determines whether or not to respond to said message based on said threshold information of intra-cell location and the intra-cell location of its own.

3. The wireless communication system according to claim 1 or 2, wherein said base station apparatus receives said response message from said mobile station apparatus, aggregates the number of mobile station apparatuses requesting an MBMS for each intra-cell location, and provides an MBMS to said mobile station apparatus based on an MBMS providing method determined for said each intra-cell location.

4. The wireless communication system according to claim 3, wherein
said base station apparatus transmits a message for notifying said MBMS providing method to a mobile station apparatus requesting an MBMS and,
if a plurality of MBMS providing methods is included in the message for notifying said MBMS providing method, said mobile station apparatus selects an MBMS providing method based on intra-cell location information of its own.

5. The wireless communication system according to claim 4, wherein said MBMS providing method is one of MBSFN (Multicast/Broadcast over Single Frequency Network), SC-PTP (Single Cell-Point To Point), SC-PTM (Single Cell-Point To Multipoint), and MC-PTM (Multi Cell-Point To Multipoint).

6. The wireless communication system according to claim 1 or 2, wherein said intra-cell location information is two-value information indicating the vicinity of cell center and the vicinity of cell edge.

7. The wireless communication system according to claim 1 or 2, wherein said intra-cell location information is either RSRP (Reference Signal Received Power) or a path-loss value.

8. A base station apparatus applied to a wireless communication system including a base station apparatus and mobile station apparatuses to provide an MBMS (Multimedia Broadcast Multicast Service), wherein
said base station apparatus
transmits a message for aggregating the number of mobile station apparatuses requesting an MBMS to a mobile station apparatuse being served, and
receives a response message corresponding to said message from said mobile station apparatus, aggregates the number of mobile station apparatuses requesting an MBMS for each intra-cell location of said mobile station apparatus, and provides an MBMS to said mobile station apparatus based on an MBMS providing method determined for said each intra-cell location.

9. The base station apparatus according to claim 8, comprising:
a transmission signal processing unit which generates a transmission signal including a message for notifying at least one MBMS providing method associated with intra-cell location information of a mobile station apparatus; and
a transmitting unit which transmits said generated transmission signal to said mobile station apparatus.

10. A mobile station apparatus applied to a wireless communication system including a base station apparatus and mobile station apparatuses to provide an MBMS (Multimedia Broadcast Multicast Service), wherein
said mobile station apparatus receives from said base station apparatus a message for aggregating the number of mobile station apparatuses requesting an MBMS and, when requesting an MBMS, adds intra-cell location information of its own to a response message to said message to transmit the response message added with said intra-cell location information to said base station apparatus.

11. The mobile station apparatus according to claim 10, comprising a counting response signal generating unit which, upon receiving a message for aggregating the number of mobile station apparatuses requesting an MBMS from said base station apparatus, adds intra-cell location information of its own to a response message corresponding to said message.

12. The mobile station apparatus according to claim 10, comprising a counting response signal generating unit which, upon receiving a message for aggregating the number of mobile station apparatuses requesting an MBMS from said base station apparatus, determines whether or not to transmit a response message corresponding to said message based on the intra-cell location information of its own.

13. The mobile station apparatus according to any of claims 10 to 12, wherein, upon receiving a transmission signal including a message for notifying at least one MBMS providing method associated with intra-cell location information of a mobile station apparatus from said base station apparatus, said mobile station apparatus selects said MBMS providing method based on the intra-cell location information of its own.

14. A communication method of a wireless communication system including a base station apparatus and mobile station apparatuses to provide an MBMS (Multimedia Broadcast Multicast Service), said method comprising at least the steps of:
in said base station apparatus, transmitting a message for aggregating the number of mobile station apparatuses requesting an MBMS to a mobile station apparatus being served; and
in a mobile station apparatus requesting an MBMS among said mobile station apparatuses,
adding intra-cell location information of the mobile station itself to a response message to the message; and
transmitting said response message added with said intra-cell location information to said base station apparatus.

15. A communication method of a wireless communication system including a base station apparatus and mobile station apparatuses to provide an MBMS (Multimedia Broadcast Multicast Service), the method comprising at least the steps of:
in said base station apparatus,
adding threshold information of intra-cell location of a mobile station apparatus to a message for aggregating the number of mobile station apparatuses requesting an MBMS; and
transmitting the message added with said threshold information to a mobile station apparatus being served; and
in a mobile station apparatus requesting an MBMS among said mobile station apparatuses, determining whether or not to respond to said message based on said threshold information of intra-cell location and intra-cell location of the mobile station itself.
